# EUROPEAN PATENT APPLICATION

(11) **EP 2 320 624 A1**
(43) Date of publication of application: **11.05.2011**
(21) Application number: 09175305.3
(22) Date of filing: 06.11.2009
(51) Int. Cl.: H04L 29/08, H04W 64/00

(54) **Method for managing a P2P network based on cellular communications**

(71) Applicant: Alcatel Lucent, 75008 Paris (FR)
(72) Inventor: El Mghazli, Yacine, 91620, Nozay (FR); Taburet, Francois, 91620, Nozay (FR)
(74) Representative: Lebkiri, Alexandre

(57) **Abstract**

The invention relates to a method for managing a P2P network (100) wherein a peer (104₁) requiring a transmission of resources from at least one providing peer (104₂) has to select said providing peer (104₂) among a list (118) of peers (104₂, 104₅, 122) hosting said resources, **characterized in that**, said requiring peer (104₁) and said hosting peers (104₂, 104₅, 122) being mobile terminals linked to a cellular (102, 103, 105, 120) network, it comprises the following steps:
- The step of associating said requiring peer (104₁) and each of said hosting peers (104₂, 104₅, 122) with their physical location within the cellular (102, 103, 105, 120) network,
- The step of determining a distance between the requiring peer (104₁) and each of the hosting peers (104₂, 104₅, 122) on the basis of their physical locations within the cellular network (102, 103, 105, 120), and
- The step of selecting the providing peer (104₂) according to a distance criterion which takes into account the determined distances between the requiring peer (104₁) and each of the hosting peers (104₂, 104₅, 122)..

## Description

The present invention relates to a method for managing a P2P network based on cellular communications.

### The prior art:

Peer to Peer networks, also called P2P networks, are increasingly used since they allow a distribution of application resources between peers.

More precisely, each peer only hosts part of these application resources, the parts being generally defined through a fair scheme whereby each peer hosts a similar amount of resources.

In case one peer desires to implement the application, it can retrieve missing resources from one (or several) peer(s) which host them. For that purpose, each peer disposes of DHTs, for "Distributed Hash Tables", which reference both the distributed resources and the peer(s) wherefrom the distributed resources can be retrieved.

### Summary of invention:

The present invention is directed to a method for managing a P2P network which takes into consideration the specificity of a cellular communication network i.e. which takes into account the physical distance between the peers in the cellular communications network.

To achieve this and other advantages, and in accordance with the purpose of the invention as embodied and broadly described herein, the present invention relates to a method for managing a P2P network wherein a peer requiring a transmission of resources from at least one providing peer has to select said providing peer among a list of peers hosting said resources, characterized in that, said requiring peer and said hosting peers being mobile terminals linked to a cellular network, it comprises the following steps:
- The step of associating said requiring peer and each of said hosting peers with their physical location within the cellular network,
- The step of determining a distance between the requiring peer and each of the hosting peers on the basis of their physical locations within the cellular network, and
- The step of selecting the providing peer according to a distance criterion which takes into account the determined distances between the requiring peer and each of the hosting peers.

Thereby, a method according to the invention adapts the classical P2P operating scheme to the specificity of a cellular communication network which represents the significant impact of distance between peers in the efficiency of transmission between peers.

Thus, it is possible to implement a distance criterion - more or less strict according to the nature of the implementing network - in order to optimize the transmission of resources between peers by reducing such distance.

In one embodiment, the method further comprises the step for said requiring peer to transmit an identification parameter to a managing server of the cellular network which associates said identification parameter with a location of the requiring peer within the network.

In one embodiment, the managing server communicates with a registering center of the cellular network to associate said identification parameter with a location of the requiring terminal within the cellular network.

In one embodiment, the method further comprises the step for said requiring peer to transmit information stored within a subscriber identity module to the managing server as the identification parameter.

In one embodiment, the transmitted identification parameter relates to at least one of the following items:
- An International Mobile Subscriber Identity or IMSI,
- A Mobile Station International Integrated Services Digital Network Number or MSISDN,
- A temporary mobile subscriber identities for PS and CS domains (TMSI and P-TMSI),
- A location area identity,
- A routing area identity.

In one embodiment, the method further comprises the step for the managing server to store an identification parameter for any mobile terminal accessing to said P2P network.

In one embodiment, the method further comprises the step for the requiring peer to transmit the list of the hosting peers to the managing server so that said managing server can implement the distance criterion.

In one embodiment, the invention further comprises the step for the managing server to communicate with a localization server of the cellular network in order to associate each peer of the network with its physical location within the cellular network.

The invention also relates to a managing server for a P2P network wherein a peer requiring a transmission of resources from at least one providing peer has to select said providing peer among a list of peers hosting said resources, characterized in that, said requiring peer and said hosting peers being mobile terminals linked to a cellular network, it comprise:
- Means for associating said requiring peer and each of said hosting peers with their physical location within the cellular network, and
- Means for determining a physical distance between the requiring peer and each of the hosting peers on the basis of their physical locations within the cellular network in order to implement a method according to any of the previous embodiments.

The server might comprise means for selecting the providing peer within the list of hosting peers according to a distance criterion which takes into account the determined physical distances between the requiring peer and each of the hosting peers.

### Description of the invention:

To optimize P2P management, the Internet Engineering Task Force (IETF) develops methods as, for instance, the Application-Layer Traffic Optimization (ALTO), which provides guidance aimed to improve the performance and the efficiency of data transmission between peers.

While such guidance is currently taken into consideration to implement peer to peer services in radio cellular networks, the invention derives from the finding that such consideration is directly based on wired models which significantly differs from the model of a radio cellular network.

Indeed, on traditional wired networks, peer distances are calculated using algorithms based on fixed addresses of the peers, typically Internet Protocol (IP) addresses within an IP network, whereas in a wireless cellular network, peer distances could be calculated on the basis of their changing addresses i.e. the cells wherein peers are registered.

In other words, using the cellular registry information of peers within a cellular network would be an easier and more efficient method to evaluate peer distances than complex calculations based on IP addresses.

By implementing such a method based on peers' localization within a cellular network, the invention provides better transmission rates within the network since the distance between peers is optimized and IP information should not be transmitted for complex calulcations.

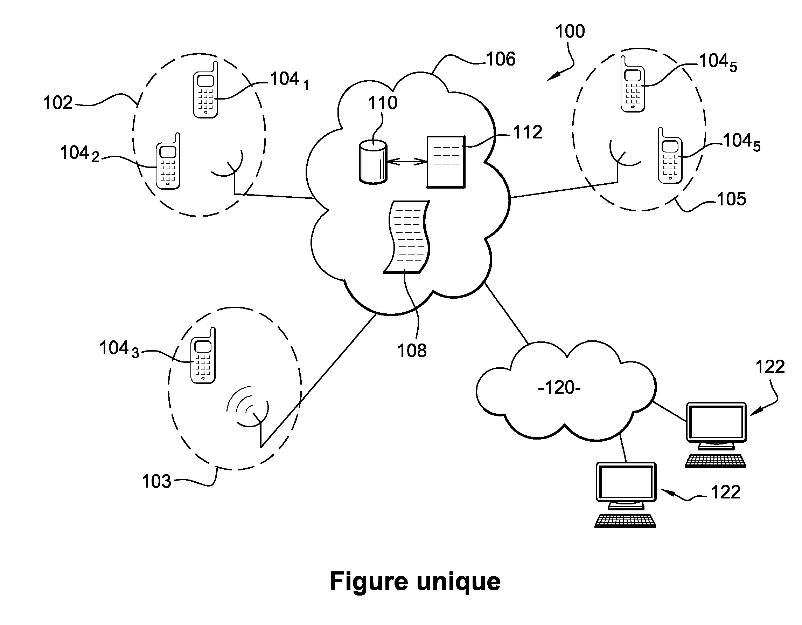

The accompanying drawing, which illustrates a P2P radio cellular network according to the invention, is included to provide a further understanding of the invention and is incorporated in, and constitutes a part of, this specification in order to illustrate embodiments of the invention and, together with the description, to explain the principles of the invention.

The invention can be implemented in different kinds of cellular technologies, such as the UMTS, for Universal Mobile Telecommunication System, LTE (for Long Term Extension) or Wifi (for Wireless Fidelity).

Further, the invention can be implemented considering a P2P network 100 which combines different cellular technologies as UMTS (cells 102 and 103), Wifi (cell 120) and LTE (cell 105).

For that purpose, the P2P network 100 comprises an Evolved Packet Core (EPC) sub-network 106 which is the LTE network infrastructure in charge of carrying data from antennas to the Internet. This way, sub-network 106 performs data transmission between different cells 102, 103, 105 and 120.

Mobile terminals 104₁, 104₂, ... 104₅ and 122 are peers of the P2P network 100 and each one of them can classically require a transmission of resources from at least another peer.

For that purpose, the requiring peer has to select said providing peer among a list of peers hosting said resources. In this embodiment, said list 108 of peers is classically established by the requiring peer - e.g. peer 104₁ - through Peer exchange servers, Distributed Hash Tables (DHT) and/or P2P trackers.

For instance, considering that peer 104₁ requires the transmission of resources relating to a given video program, the peer 104₁ will contact a dedicated tracker so that said tracker can provide the list 108 of the peers which already subscribe to the required resources of the given video program.

Considering for instance that peers 104₂, 104₅ and 122 might deliver the required resources to requiring peer 104₁, the selection of the providing peer between hosting peers 104₂, 104₅ and 122 is performed according to a distance criterion which optimizes the physical transmission distance of the required resources within the P2P network.

For that purpose, the requiring peer 104₁ and the hosting peers 104₂, 104₅ and 122 are associated with their physical location within the cellular network.

Typically, this association can be performed through a registering center, such as a Home Location Register (HLR) as classically used within an cellular network, 112 which operates as a central database that contains details of each mobile terminal subscriber authorized to use the cellular core network 106.

The HLR 112 stores information contained on the subscriber identity module (SIM) issued by mobile terminal operator for each mobile terminal. For instance, HLR 112 can store SIM unique identifier, or International Mobile Subscriber Identity (IMSI), which is a primary key to each HLR record.

Also, the HLR 112 might store mobile station international integrated services digital network numbers, or MSISDN, which are the contact numbers used by mobile terminals to establish communications.

A primary MSISDN is generally used for making and receiving voice calls and scripts according to Short Messages Standards, but it is possible for a SIM to have other secondary MSISDNs for fax and/ data calls.

Another example of a terminal location uses a Visitor Location Register (VLR) which stores information about mobile terminals linked to a mobile switching center (MSC) which it serves. More precisely, such VLR stores information about the current Location Area Identity (LAI) which identifies under which base station controller a mobile terminal is currently present.

Whenever an MSC detects a new mobile terminal in its operating area, it creates a new record in the VLR and updates the HLR 112 so that both registers can be used to associate a mobile terminal with its location within the network.

In this embodiment, the requiring peer 104₁ transmits information stored within a subscriber identity module (SIM) as an identification to be registered a managing database 110 in order to be stored.

Depending on the embodiments, the transmitted information stored within the subscriber identity module relates to one or more of the following items:
- An International Mobile Subscriber Identity or IMSI,
- A Mobile Station International Integrated Services Digital Network Number or MSISDN,
- A temporary mobile subscriber identities for PS and CS domains (TMSI and P-TMSI),
- A location area identity (LAI) and/or a routing area identity (RAI), .herein:
- the LAI is used for circuit mode whereas the RAI is used for packet mode, RAI is usually a sub-division of the LAI because of the nature of the packet traffic. In other words, one LAI usually covers several RAI so that RAI is a relevant parameter to establish peers lists.

The TMSI is used to identify the mobile in the network. It is the preferred mechanism to identify the mobile node for security reasons: it is temporarily assigned to the mobile by the VLR. The TMSI is used to retrieve information about a mobile but not to directly to localize it. Similarly, The P-TMSI is used to identify a mobile node within a "routing area" so that this parameter might provide a relevant localization of a peer within the terminal.

The managing server 110 having access to the registering center 112, it is possible to determine a distance between the requiring peer 104₁ and each of the hosting peers 104₂, 104₅ and 122.

On the basis of the determined distances, the managing server 110 indicates to the requiring terminal 104₁ which hosting terminal should be selected in order to optimize a distance criterion such as, for instance, a simple one whereby the closest hosting peer 104₂ is selected to transmit the required communications.

It must be underlined that, in this example, the physical distance between requiring peers and hosting peers is established on terms of cells, peer 104₂ being in the same cell than the requiring peer 104₁ whereas hosting cells 104₅ and122 are in distant cells 105 and 120.

The invention might be implemented according to different embodiments which, for instance, apply a distance criterion which takes into account both the distance between peers and another parameter - such as a quality of service.

Other embodiments might differ from the above described embodiment in that:
- The managing server 110 and the registering server 112 can be combined into one single server, and/or
- The list 108 is established by the managing server 110 and/or the registering server 112.

As explained, the invention is about using existing localization parameters in a cellular network (e.g. GSM/UMTS/LTE) so as, for instance, to extend the ALTO protocol accordingly. This way, peer selection can be optimized in cellular wireless network, with better and easier to obtain results than using IP addressed-based algorithms.

In one embodiment, Global Positioning System data could also be used instead of IP based algorithms. Conversely the advantage of using cell localization is that this information is always available for a connected mobile. Moreover, cell identification is a more relevant parameter than geographic coordinates. For instance, considering two close mobile terminals connected to different cells, it's better to select a peer which belongs to the same cell from a network point of view,

Nevertheless, GPS coordinates could complement and/or replace cell location, for example when a peer uses non cellular access.

## Claims

1. Method for managing a P2P network (100) wherein a peer (104₁) requiring a transmission of resources from at least one providing peer (104₂) has to select said providing peer (104₂) among a list (118) of peers (104₂, 104₅, 122) hosting said resources, **characterized in that**, said requiring peer (104₁) and said hosting peers (104₂, 104₅, 122) being mobile terminals linked to a cellular (102, 103, 105, 120) network, it comprises the following steps:
- The step of associating said requiring peer (104₁) and each of said hosting peers (104₂, 104₅, 122) with their physical location within the cellular (102, 103, 105, 120) network,
- The step of determining a physical distance between the requiring peer (104₁) and each of the hosting peers (104₂, 104₅, 122) on the basis of their physical locations within the cellular network (102, 103, 105, 120), and
- The step of selecting the providing peer (104₂) according to a distance criterion which takes into account the determined physical distances between the requiring peer (104₁) and each of the hosting peers (104₂, 104₅, 122).

2. Method according to claim 1 wherein it further comprises the step for said requiring peer (104₁) to transmit an identification parameter to a managing server (110) of the cellular network which associates said identification parameter with a location of the requiring terminal within the network.

3. Method according to claim 2 wherein the managing server communications with a registering center (112) of the cellular (102, 103, 105, 120) network to associate said identification parameter with a location of the requiring terminal within the cellular network.

4. Method according to claim 2 or 3 wherein it further comprises the step for said requiring peer (104₁) to transmit information stored within a subscriber identity module the managing server (110) as the identification parameter.

5. Method according to claim 3 wherein the transmitted identification parameter relates to at least one of the following items:
- an International Mobile Subscriber Identity or IMSI,
- a Mobile Station International Integrated Services Digital Network Number or MSISDN,
- Temporary mobile subscriber identities for PS and CS domains (TMSI and P-TMSI),
- a location area identity,
- A routing area identity.

6. Method according to any of the claims 2 to 5 wherein it comprises the further step for the managing server (110) to store an identification parameter for any mobile terminal accessing to the P2P network (100).

7. Method according to any of the claims 2 to 6 wherein it comprises the further step for the requiring peer (104₁) to transmit the list (118) of the hosting peers (104₂, 104₅, 122) to the managing server (110) so that said managing server (110) can implement the distance criterion.

8. Managing server (110) for a P2P network (100) wherein a peer (104₁) requiring a transmission of resources from at least one providing peer (104₂) has to select said providing peer (104₂) among a list (118) of peers (104₂, 104₅, 122) hosting said resources, **characterized in that**, said requiring peer (104₁) and said hosting peers (104₂, 104₅, 122) being mobile terminals linked to a cellular (102, 103, 105, 120) network, it comprise:
- Means for associating said requiring peer (104₁) and each of said hosting peers (104₂, 104₅, 122) with their physical location within the cellular (102, 103, 105, 120) network, and
- Means for determining a physical distance between the requiring peer (104₁) and each of the hosting peers (104₂, 104₅, 122) on the basis of their physical locations within the cellular network (102, 103, 105, 120) in order to implement a method according to any of the previous claims.

9. Server according to claim 8 comprising means for selecting the providing peer (104₂) within the list (118) of hosting peers according to a distance criterion which takes into account the determined physical distances between the requiring peer (104₁) and each of the hosting peers (104₂, 104₅, 122).
